(19) **Europäisches Patentamt / European Patent Office / Office européen des brevets**

(11) **EP 3 712 288 A1**

(12) **EUROPEAN PATENT APPLICATION**
published in accordance with Art. 153(4) EPC

(43) Date of publication:
**23.09.2020 Bulletin 2020/39**

(21) Application number: **18879447.3**

(22) Date of filing: **01.11.2018**

(51) Int Cl.:
*C22C 38/00* (2006.01)　　　*B23K 35/30* (2006.01)
*C22C 38/58* (2006.01)　　　*C22C 38/02* (2006.01)
*C22C 38/04* (2006.01)　　　*C22C 38/06* (2006.01)
*C22C 38/42* (2006.01)　　　*C22C 38/44* (2006.01)
*C22C 38/46* (2006.01)　　　*C22C 38/48* (2006.01)
*C22C 38/50* (2006.01)　　　*C22C 38/52* (2006.01)
*C22C 38/54* (2006.01)　　　*B23K 103/04* (2006.01)

(86) International application number:
**PCT/JP2018/040656**

(87) International publication number:
**WO 2019/098034 (23.05.2019 Gazette 2019/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.11.2017　JP 2017219656**
**15.11.2017　JP 2017219657**

(71) Applicant: **Nippon Steel Corporation**
**Tokyo 100-8071 (JP)**

(72) Inventors:
- **KURIHARA, Shinnosuke**
  **Tokyo 100-8071 (JP)**
- **HIRATA, Hiroyuki**
  **Tokyo 100-8071 (JP)**
- **SEMBA, Hiroyuki**
  **Tokyo 100-8071 (JP)**
- **JOTOKU, Kana**
  **Tokyo 100-8071 (JP)**

(74) Representative: **J A Kemp LLP**
**14 South Square**
**Gray's Inn**
**London WC1R 5JJ (GB)**

(54) **AUSTENITIC HEAT-RESISTANT STEEL WELDING METAL, WELDED JOINT, WELDING MATERIAL FOR AUSTENITIC HEAT-RESISTANT STEEL, AND METHOD FOR PRODUCING WELDED JOINT**

(57)　An austenitic heat-resistant steel weld metal with low high-temperature cracking susceptibility and good creep strength is provided. The austenitic heat-resistant steel weld metal has a chemical composition of, in mass %: 0.06 % - 0.14 % C; 0.1 % - 0.6 % Si; 0.1 % - 1.8 % Mn; up to 0.025 % P; up to 0.003 % S; 25 % - 35 % Ni; 20 % - 24 % Cr; more than 4.5 % and up to 7.5 % W; 0.05 % - 0.5 % Nb; 0.05 % - 0.4 % V; 0.1 % - 0.35 % N; up to 0.08 % Al; up to 0.08 % O; and 0.0005 to 0.005 % B, fn1 expressed by the following Equation (1) being not less than 10:

$$\mathrm{fn1} = 10(\mathrm{Nb}+\mathrm{V}) + 1.5\mathrm{W} + 20\mathrm{N} + 1500\mathrm{B} - 25\mathrm{Si} \qquad (1),$$

where, for Nb, V, W, N, B and Si in Equation (1), the contents of the named elements in mass % are substituted.

**EP 3 712 288 A1**

**Description**

TECHNICAL FIELD

The present invention relates to an austenitic heat-resistant steel weld metal, a welded joint, a welding material for an austenitic heat-resistant steel, and a method of manufacturing a welded joint.

BACKGROUND ART

In the field of boilers for thermal power generation and other facilities, there have recently been world-wide trends toward higher temperatures and higher pressures during operation to reduce environmental burdens. Materials used in superheater tubes and reheater tubes are required to have improved high-temperature strength, corrosion resistance and other properties.

Materials meeting these and other requirements have been developed, including various austenitic heat-resistant steels containing large amounts of nitrogen and large amounts of nickel (an austenitic heat-resistant steel containing a large amount of nitrogen and a large amount of nickel will be hereinafter sometimes referred to as "high-nitrogen/high-nickel-content austenitic heat-resistant steel").

For example, Patent Document 1 proposes an austenitic heat-resistant steel with good high-temperature strength containing 0.02 % - 0.3 % N, 17 % - 50 % Ni and 18 % - 25 % Cr, as well as 0.05 % - 0.6 % Nb, 0.03 % - 0.3 % Ti and 0.3 % - 5 % Mo.

Patent Document 2 proposes an austenitic heat-resistant steel with good high-temperature strength containing 0.1 % - 0.30 % N, 22.5 % - 32 % Ni and 20 % - 27 % Cr, as well as additional strengthening elements, namely 0.4 % - 4 % W and 0.20 % - 0.60 % Nb.

Patent Document 3 proposes an austenitic heat-resistant steel with good creep properties and hot workability containing more than 0.05 % and up to 0.3 % N, more than 15 % and up to 55 % Ni, and more than 20 % and less than 28 % Cr, as well as 0.1 % - 0.8 % Nb, 0.02 % - 1.5 % V and 0.05 % - 10 % W.

Patent Document 4 proposes an austenitic heat-resistant steel with good creep properties containing more than 0.13 % and up to 0.35 % N, more than 26 % and up to 35 % Ni, and 20 % - 26 % Cr, as well as 0.01 % - 0.1 % Nb, 0.01 % - 1 % V and 1 % - 5.5 % W.

These austenitic heat-resistant steels are typically used as welded structures. Accordingly, various weld metals and welding materials that allow these austenitic heat-resistant steels to exhibit their properties have also been proposed.

For example, Patent Document 5 teaches that a welding material for austenitic heat-resistant steel containing 0.25 % - 0.7 % Nb and 0.15 % - 0.35 % N as well as an amount of Ni depending on the amounts of Cr, Si, C and N, with limited amounts of P and S, can provide both high-temperature strength and solidification-cracking resistance.

Patent Document 6 teaches that a welding material for austenitic heat-resistant steel containing 0.2 % - 0.4 % N, 0.01 % - 0.7 % Nb, 0.5 % - 1.5 % Mo and 18 % - 30 % Ni, with the total amount of P and S limited to 0.02 % or lower, can provide both high-temperature strength and weldability.

Patent Document 7 discloses a welding material for austenitic heat-resistant steel containing 0.5 % - 3.5 % Nb, 0.1 % - 0.35 % N, 0.2 % - 1.8 % Mo, 30 % - 45 % Ni, etc., and an austenitic heat-resistant steel weld metal containing 0.3 % - 3.5 % Nb, 0.1 % - 0.35 % N, 0.2 % - 1.8 % Mo, 35 % - 45 % Ni, etc.

Patent Document 8 discloses a welding material for austenitic heat-resistant steel containing 0.8 % - 4.5 % Nb, 0.1 % - 0.35 % N, 0.2 % - 1.8 % Mo, 30 % - 50 % Ni, etc., and an austenitic heat-resistant steel weld metal containing 0.5 % - 4 % Nb, 0.1 % - 0.35 % N, 0.2 % - 1.8 % Mo, 30 % - 50 % Ni, etc.

Patent Document 9 discloses a welding material for austenitic heat-resistant steel containing 0.15 % - 1.5 % Nb, 0.5 % - 3 % W, 0.1 % - 0.35 % N, 15 % - 25 % Ni, etc., and an austenitic heat-resistant steel weld metal containing 0.1 % - 1.5 % Nb, 0.5 % - 3 % W, 0.1 % - 0.35 % N and 15 % - 25 % Ni.

Patent Document 10 discloses an austenitic heat-resistant steel containing 0.1 % - 0.6 % Nb, 1 % - 5 % W, 0.1 % - 0.35 % N and 23 % - 32 % Ni.

PRIOR ART DOCUMENTS

PATENT DOCUMENTS

[Patent Document 1] JP Sho59(1984)-173249 A
[Patent Document 2] JP 2002-537486 A
[Patent Document 3] Japanese Patent No. 3838216

[Patent Document 4] JP 2017-88957 A
[Patent Document 5] Japanese Patent No. 2722893
[Patent Document 6] JP Hei07(1995)-060481 A
[Patent Document 7] Japanese Patent No. 3329262
[Patent Document 8] Japanese Patent No. 3918670
[Patent Document 9] Japanese Patent No. 3329261
[Patent Document 10] JP 2017-14576 A

SUMMARY OF THE INVENTION

PROBLEMS TO BE SOLVED BY THE INVENTION

The welding material for austenitic heat-resistant steel disclosed by Patent Document 2 and the austenitic heat-resistant steel weld metal disclosed by Patent Document 10 have good creep strength at 700 °C. However, in applications assuming use at higher temperatures, it is difficult to ensure creep strength of the welding material for austenitic heat-resistant steel disclosed by Patent Document 2 or the austenitic heat-resistant steel weld metal disclosed by Patent Document 10.

The austenitic heat-resistant steel weld metals and welding materials disclosed by Patent Documents 7 to 9 mainly use Nb as a precipitation-strengthening element and thus, indeed, provide good properties, such as high strength and corrosion resistance. However, since the austenitic heat-resistant steel weld metals and welding materials disclosed by Patent Documents 7 to 9 have very high strengthening ability, the interior of grains is excessively strengthened during use at high temperatures, leading to a relative reduction in grain-boundary strength or a rapid reduction in toughness at an early stage of use, potentially increasing the high-temperature cracking susceptibility during welding.

Thus, a need exists for the development of a weld metal that allows high-nitrogen/high-nickel-content austenitic heat-resistant steel to fully exhibit their properties, and a welded joint having such a weld metal.

The present invention was made in view of the above-discussed current situation, and an object thereof is to provide an austenitic heat-resistant steel weld metal with low high-temperature cracking susceptibility and good creep strength that allows high-nitrogen/high-nickel-content austenitic heat-resistant steel to fully exhibit their properties when the high-nitrogen/high-nickel-content austenitic heat-resistant steel is used as a welded structure, and a welded joint having such a weld metal. Another object of the present invention is to provide a welding material suitable for welding high-nitrogen/high-nickel-content austenitic heat-resistant steel, and a method of manufacturing such a welded joint.

MEANS FOR SOLVING THE PROBLEMS

The present inventors conducted various kinds of research on high-nitrogen/high-nickel-content austenitic heat-resistant steels containing W and/or Nb. This research produced the following findings.

Similar to Nb, V, which can precipitate as a carbide and nitride, may be added to ensure creep strength during long-time use.

Another finding relates to situations where, in a high-nitrogen/high-nickel-content austenitic heat-resistant steel, nitrides composed of Cr, Ni and N may precipitate in a high-temperature range, reducing the amount of dissolved nitrogen in the matrix. Since these nitrides precipitate in large amounts at high Si amounts to stabilize microstructure, the amount of nitrogen dissolved in the matrix decreases as the Si amount increases, reducing creep strength. Thus, reducing the Si amount may ensure creep strength during long-time use.

Further, to provide the required creep strength at high temperatures above 700 °C, high W contents need to be added.

Nb, V, W, N and B contribute to the improvement of creep strength, and a reduction in Si contributes to the improvement of creep strength. The inventors conducted various experiments on these elements, and found that applying, to factors, the degrees of contribution of these elements to creep strength can allow obtaining a summarized indication of creep strength, represented as $fn1=10(Nb+V)+1.5W+20N+1500B-25Si$. To ensure creep strength at high temperatures, the value calculated from fn1 needs to be 10 or higher.

Based on these various kinds of research, the inventors arrived at the present invention. A summary of the invention is as follows.

<1> An austenitic heat-resistant steel weld metal having a chemical composition of, in mass %:

0.06 % - 0.14 % C;
0.1 % - 0.6 % Si;
0.1 % - 1.8 % Mn;

up to 0.025 % P;
up to 0.003 % S;
25 % - 35 % Ni;
20 % - 24 % Cr;
more than 4.5 % and up to 7.5 % W;
0.05 % - 0.5 % Nb;
0.05 % - 0.4 % V;
0.1 % - 0.35 % N;
up to 0.08 % Al;
up to 0.08 % O;
0.0005 - 0.005 % B;
0 % - 0.25 % Ti;
0 % - 4 % Cu;
0 % - 2 % Co;
0 % - 2 % Mo;
0 % - 1 % Ta;
0 % - 0.02 % Ca;
0 % - 0.02 % Mg;
0 % - 0.06 % REM; and
balance Fe and impurities,

fn1 expressed by the following Equation (1) being not less than 10:

$$fn1=10(Nb+V)+1.5W+20N+1500B-25Si \qquad (1),$$

where, for Nb, V, W, N, B and Si in Equation (1), the contents of the named elements in mass % are substituted.
<2> An austenitic heat-resistant steel weld metal as described in <1>, wherein the chemical composition includes one or more elements selected from the group consisting of, in mass %:

0.01 % - 0.25 % Ti;
0.01 % - 4 % Cu;
0.01 % - 2 % Co;
0.01 % - 2 % Mo;
0.01 % - 1 % Ta;
0.0005 % - 0.02 % Ca;
0.0005 % - 0.02 % Mg; and
0.0005 % - 0.06 % REM.

<3> A welded joint including:

the austenitic heat-resistant steel weld metal as described in <1> or <2>; and
a base material of austenitic heat-resistant steel.

<4> A welded joint as described in <3>, wherein the base material has a chemical composition of, in mass %:

0.02 % - 0.14 % C;
0.05 % - 1 % Si;
0.1 % - 3 % Mn;
up to 0.04 % P;
up to 0.002 % S;
26 % - 35 % Ni;
20 % - 26 % Cr;
1 % - 7 % W;
0.01 % - 1 % Nb;
0.01 % - 1 % V;
0.1 % - 0.6 % N;

0.0005 % - 0.008 % B;
0.003 % - 0.06 % REM;
up to 0.3 % Al;
up to 0.02 % O;
0 % - 0.5 % Ti;
0 % - 2 % Co;
0 % - 4 % Cu;
0 % - 4 % Mo;
0 % - 1 % Ta;
0 % - 0.02 % Ca;
0 % - 0.02 % Mg; and
balance Fe and impurities.

<5> A welded joint as described in <4>, wherein the base material has a chemical composition including one or more elements selected from the group consisting of, in mass %:

0.01 % - 0.5 % Ti;
0.01 % - 2 % Co;
0.01 % - 4 % Cu;
0.01 % - 4 % Mo;
0.01 % - 1 % Ta;
0.0005 % - 0.02 % Ca; and
0.0005 % - 0.02 % Mg.

<6> A welding material for austenitic heat-resistant steel having a chemical composition of, in mass %:

0.06 % - 0.14 % C;
0.1 % - 0.4 % Si;
0.1 % - 1.2 % Mn;
up to 0.01 % P;
up to 0.003 % S;
28 % - 35 % Ni;
20 % - 24 % Cr;
more than 4.5 % and up to 7.5 % W;
0.05 % - 0.5 % Nb;
0.05 % - 0.35 % V;
0.1 % - 0.35 % N;
up to 0.08 % Al;
up to 0.08 % O;
0.0005 % - 0.005 % B;
0 % - 0.25 % Ti;
0 % - 4 % Cu;
0 % - 2 % Co;
0 % - 2 % Mo;
0 % - 1 % Ta;
0 % - 0.02 % Ca;
0 % - 0.02 % Mg;
0 % - 0.06 % REM; and
balance Fe and impurities,

fn1 expressed by the following Equation (1) being not less than 10:

$$fn1 = 10(Nb+V) + 1.5W + 20N + 1500B - 25Si \qquad (1),$$

where, for Nb, V, W, N, B and Si in Equation (1), the contents of the named elements in mass % are substituted.
<7> A welding material for austenitic heat-resistant steel as described in <6>, wherein the chemical composition includes one or more elements selected from the group consisting of, in mass %:

0.01 % - 0.25 % Ti;
0.01 % - 4 % Cu;
0.01 % - 2 % Co;
0.01 % - 2 % Mo;
0.01 % - 1 % Ta;
0.0005 % - 0.02 % Ca;
0.0005 % - 0.02 % Mg; and
0.0005 % - 0.06 % REM.

<8> A method of manufacturing a welded joint as described in <4>, comprising welding the base material having the chemical composition described in <4> using the welding material for austenitic heat-resistant steel as described in <6>.

EFFECTS OF THE INVENTION

The present invention provides a welding material suitable for welding high-nitrogen/high-nickel-content austenitic heat-resistant steel, and an austenitic heat-resistant steel weld metal with low high-temperature cracking susceptibility and good creep strength that allows high-nitrogen/high-nickel-content austenitic heat-resistant steel to fully exhibit their properties, and a welded joint having such a weld metal.

EMBODIMENTS FOR CARRYING OUT THE INVENTION

An austenitic heat-resistant steel weld metal, a welding material for austenitic heat-resistant steel and a welded joint and a method of manufacturing such a joint according to an embodiment of the present invention will be described below. As used herein, a numerical range represented using "-" means a range including numerical values set forth before and after "-" as lower and upper limits, unless specifically stated otherwise. However, a specific statement such as "more than" or "less than" means that at least one of the numerical values stated before and after "-" as the lower and upper limits is not included.

<Weld metal and Welding Material>

The reasons for the limitations of the chemical compositions of the austenitic heat-resistant steel weld metal and the welding material for austenitic heat-resistant steel according to the present invention will be discussed below.
In the following description, the indication "%" for the contents of the various elements means "mass percent". Further, the chemical composition of the weld metal is the quantified chemical composition of portions of the weld metal where the effects of dilution of the base material are not significant. More particularly, the chemical composition of the weld metal is the quantified chemical composition of portions of the weld metal at and near the center thereof, and, if possible, the quantified chemical composition of portions 0.5 mm or more away from the fusion line. Further, "impurities" means ingredients originating from ore or scrap used as raw material or the manufacturing environment or the like when the austenitic heat-resistant steel is manufactured on an industrial basis, and not intentionally included.

C: 0.06 % - 0.14 % (weld metal); 0.06 % - 0.14 % (welding material)

Carbon (C) stabilizes austenite microstructure and, in addition, forms fine carbides to improve creep strength during use at high temperatures. To sufficiently produce these effects, 0.06 % or more C must be contained. However, if the C content is excessive, this means that large amounts of carbides are present in the weld metal, reducing ductility and toughness. In view of this, to define an upper limit, the C content is to be not higher than 0.14 %. To define a lower limit, the C content is desirably not lower than 0.07 %, and more desirably not lower than 0.08 %. To define an upper limit, the C content is desirably not higher than 0.13 %, and more desirably not higher than 0.12 %.

Si: 0.1 % - 0.6 % (weld metal); 0.1 % - 0.4 % (welding material)

Silicon (Si) has the effect of deoxidation and, in addition, is an effective element for improving corrosion resistance and oxidation resistance at high temperatures. To produces these effects, 0.1 % or more Si needs to be contained. However, if an excessive amount of Si is contained, nitrides composed of Cr, Ni and N precipitate to stabilize the microstructure, leading to a reduction in the amount of nitrogen dissolved in the matrix, reducing creep strength. In view of this, to define an upper limit, the Si content is to be not higher than 0.6 % for weld metal, and not higher than 0.4 % for welding material. To define a lower limit, the Si content is desirably not lower than 0.12 % and more desirably not lower than 0.15 % for both weld metal and welding material. To define an upper limit, the Si content for weld metal is desirably not higher than 0.58 %, more desirably not higher than 0.55 %, and yet more desirably not higher than 0.40 %. To define an upper limit, the Si content for welding material is desirably not higher than 0.38 %, and more desirably not higher than 0.35 %.

Mn: 0.1 % - 1.8 % (weld metal); 0.1 % - 1.2 % (welding material)

Similar to Si, Manganese (Mn) has the effect of deoxidization. Further, Mn stabilizes austenite microstructure, and contributes to the improvement of creep strength. To produce these effects, 0.1 % or more Mn needs to be contained. However, if the Mn content is excessive, this leads to embrittlement, and also causes a reduction in creep ductility. Further, for the use as welding material, Mn increases solidification cracking susceptibility during welding. In view of this, to define an upper limit, the Mn content is to be not higher than 1.8 % for weld metal, and not higher than 1.2 % for welding material. For both weld metal and welding material, to define a lower limit, the Mn content is desirably not lower than 0.15 %, and more desirably not lower than 0.2 %. To define an upper limit, the Mn content for weld metal is desirably not higher than 1.6 %, and more desirably not higher than 1.4 %. To define an upper limit, the Mn content for welding material is desirably not higher than 1.1 %, and more desirably not higher than 1.0 %.

P: up to 0.025 % (weld metal); up to 0.01 % (welding material)

Phosphorus (P) is an element that is contained as an impurity and reduces creep ductility. Further, for the use in welding material, P increases the solidification cracking susceptibility during welding. In view of this, an upper limit is specified for P content, which is not higher than 0.025 % for weld metal and not higher than 0.01 % for welding material. To define an upper limit, the P content for weld metal is desirably not higher than 0.023 %, and more desirably not higher than 0.020 %. To define an upper limit, the P content for welding material is desirably not higher than 0.008 %, and more desirably not higher than 0.006 %. While it is desirable to minimize P content, an excessive reduction leads to increased manufacturing costs. In view of this, to define a lower limit, the P content is desirably not lower than 0.0005 % and more desirably not lower than 0.0008 % for both weld metal and welding material.

S: up to 0.003 % (weld metal); up to 0.003 % (welding material)

Similar to P, sulfur (S) is contained as an impurity, and segregates along boundaries of columnar crystals of weld metal at early stages of use at high temperatures to reduce toughness. Further, S increases the solidification cracking susceptibility during welding. To suppress these effects in a stable manner, an upper limit also needs to be specified for S content, which is not higher than 0.003 %. The S content is desirably not higher than 0.0025 % and more desirably not higher than 0.002 %. While it is desirable to minimize S content, an excessive reduction leads to an increased cost of manufacturing welding material. In view of this, to define a lower limit, the S content is desirably not lower than 0.0001 % and more desirably not lower than 0.0002 % for both weld metal and welding material.

Ni: 25 % - 35 % (weld metal); 28 % - 35 % (welding material)

Nickel (Ni) increases the stability of austenite microstructure during long-time use and contributes to the improvement of creep strength. To sufficiently produce these effects, 25 % or more Ni for weld metal and 28 % or more Ni for welding material need to be contained. However, Ni is an expensive element, and a high content means a higher cost. In view of this, an upper limit is specified for Ni content, which is not higher than 35 % for both weld metal and welding material. To define a lower limit, the Ni content for weld metal is desirably not lower than 25.5 %, and more desirably not lower than 26 %. To define a lower limit, the Ni content for welding material is desirably not lower than 28.5 %, and more desirably not lower than 29 %. To define an upper limit, the Ni content is desirably not higher than 34.5 % and more desirably not higher than 34 % for both weld metal and welding material.

Cr: 20 % - 24 % (weld metal); 20 % - 24 % (welding material)

Chromium (Cr) is an essential element for ensuring oxidation resistance and corrosion resistance at high temperatures. Further, Cr forms fine carbides to contribute to the ensuring of creep strength. To sufficiently produce these effects, 20 % or more Cr needs to be contained. However, a Cr content more than 24 % deteriorates the stability of austenite microstructure at high temperatures, leading to a significant reduction in creep strength. In view of this, the Cr content is to be 20 % - 24 %. To define a lower limit, the Cr content is desirably not lower than 20.5 %, and more desirably not lower than 21 %. To define an upper limit, the Cr content is desirably not higher than 23.5 %, and more desirably not higher than 23 %.

W: more than 4.5 % and up to 7.5 % (weld metal); more than 4.5 % and up to 7.5 % (welding material)

Tungsten (W) is an element that dissolves in the matrix and significantly contributes to the improvement of creep strength and tensile strength at high temperatures. To sufficiently produce these effects, at least more than 4.5 % W needs to be contained. However, W is an expensive element and an excessive W content means a higher cost, and also reduces microstructure stability. In view of this, to define an upper limit, the W content is to be not higher than 7.5 %. To define a lower limit, the W content is desirably not lower than 4.7 %, more desirably not lower than 5 %, and yet more desirably not lower than 5.5 %. To define an upper limit, the W content is desirably not higher than 7.3 %, and more desirably not higher than 7 %.

Nb: 0.05 % - 0.5 % (weld metal); 0.05 % - 0.5 % (welding material)

Niobium (Nb) has a strong affinity to carbon and nitrogen, and precipitates inside grains in the form of fine carbides and nitrides to contribute to the improvement of the creep strength and tensile strength of weld metal at high temperatures. To sufficiently produce these effects, 0.05 % or more Nb needs to be contained. However, an excessive Nb content increases the amount of precipitation at early stages of use at high temperatures, leading to a reduction of toughness. In view of this, to define an upper limit, the Nb content is to be not higher than 0.5 %. To define a lower limit, the Nb content is desirably not lower than 0.08 % and more desirably not lower than 0.1 % for both weld metal and welding material. To define an upper limit, the Nb content of weld metal is desirably not higher than 0.48 %, and more desirably not higher than 0.45 %. To define an upper limit, the Nb content of welding material is to be not higher than 0.47 %, and more desirably not higher than 0.4 %.

V: 0.05 % - 0.4 % (weld metal); 0.05 % - 0.35 % (welding material)

Similar to Nb, Vanadium (V) forms fine carbides and nitrides, but its affinity to carbon and nitrogen is weaker than that of Nb. As such, V does not as significantly affect the toughness at early stages of use as Nb, and contributes to the improvement of creep strength of weld metal. To produce this effect, 0.05 % or more V needs to be contained. However, an excessive V content results in large amounts of precipitation and, at the same time, significantly coarsens precipitates, which reduces creep strength and ductility. In view of this, to define an upper limit, the V content is to be not higher than 0.4 % for weld metal, and not higher than 0.35 % for welding material. To define a lower limit, the V content is desirably not lower than 0.08 %, and more desirably not lower than 0.1 %. To define an upper limit, the V content of weld metal is desirably not higher than 0.38 %, and more desirably not higher than 0.35 %. To define an upper limit, the V content of welding material is desirably not higher than 0.32 %, and more desirably not higher than 0.3 %.

N: 0.1 % - 0.35 % (weld metal); 0.1 % - 0.35 % (welding material)

Nitrogen (N) stabilizes austenite microstructure and, in addition, contributes to the improvement of high-temperature strength through solution strengthening or precipitation strengthening. To produce these effects, 0.1 % or more N needs to be contained. However, an N content more than 0.35 % results in large amounts of precipitated nitrides, which reduces toughness. In view of this, the N content is to be 0.1 % - 0.35 %. To define a lower limit, the N content is desirably not lower than 0.12 %, and more desirably not lower than 0.15 %. To define an upper limit, the N content is desirably not higher than 0.32 %, and more desirably not higher than 0.3 %.

Al: up to 0.08 % (weld metal); up to 0.08 % (welding material)

Aluminum (Al) is contained as an deoxidizing agent added during manufacture of base material, and also contained as a deoxidizing agent added during manufacture of welding material. As a result, Al is contained in weld metal. A high Al content reduces ductility. In view of this, to define an upper limit, the Al content needs to be not higher than 0.08 %. To define an upper limit, the Al content is desirably not higher than 0.06 %, and more desirably not higher than 0.04 %. Although no lower limit needs to be specified for Al content, an excessive reduction in Al content leads to an increase in manufacturing costs. In view of this, to define a lower limit, the Al content is desirably not lower than 0.0005 %, and more desirably not lower than 0.001 %.

O: up to 0.08 % (weld metal); up to 0.08 % (welding material)

Oxygen (O) is contained as an impurity in weld metal. However, an excessive O content deteriorates toughness and ductility. In view of this, to define an upper limit, the O content is to be not higher than 0.08 %. To define an upper limit, the O content is desirably not higher than 0.06 %, and more desirably not higher than 0.04 %. Although no lower limit needs to be specified for O content, an excessive reduction in O content leads to an increase in manufacturing costs. In view of this, to define a desirable lower limit, the O content is to be not lower than 0.0005 %, and, to define a more desirable lower limit, not lower than 0.0008 %.

B: 0.0005 % - 0.005 % (weld metal); 0.0005 % - 0.005 % (welding material)

Boron (B) allows fine carbides to be dispersed to improve the creep strength of weld metal, and, in addition, strengthens grain boundaries to contribute to the improvement of toughness. To produce these effects, 0.0005 % or more B needs to be contained. However, an excessive B content increases solidification cracking susceptibility during welding. In view of this, to define an upper limit, the B content is to be not higher than 0.005 %. To define an upper limit, the B content is desirably not higher than 0.004 %, more desirably not higher than 0.003 %, and yet more desirably not higher than 0.002 %. To define a lower limit, the B content is desirably not lower than 0.0007 %, and more desirably not lower than 0.001 %.

fn1=10(Nb+V)+1.5W+20N+1500B-25Si: 10 or more

As discussed above, Nb, V, W, N and B contribute to the improvement of creep strength, and reducing Si contributes to the improvement of creep strength. To ensure creep strength at high temperatures, the value calculated from fn1=10(Nb+V)+1.5W+20N+1500B-25Si needs to be not lower than 10. fn1 is desirably not lower than 12, more desirably not lower than 12.5, and yet more desirably not lower than 13.

The balance of the chemical composition of the austenitic heat-resistant steel weld metal and the welding material for austenitic heat-resistant steel according to the present embodiment is Fe and impurities.

The austenitic heat-resistant steel weld metal and the welding material for austenitic heat-resistant steel according to the present embodiment may contain one or more elements selected from the group consisting of Ti, Cu, Co, Mo, Ta, Ca, Mg and REM. These elements are all optional elements. In other words, the austenitic heat-resistant steel weld metal and the welding material for austenitic heat-resistant steel according to the present embodiment may not contain one or more of these elements. These ingredients will be described below.

Ti: 0 % - 0.25 % (weld metal); 0 % - 0.25 % (welding material)

Similar to Nb and V, titanium (Ti) forms fine carbides and nitrides and contributes to the improvement of creep strength and tensile strength at high temperatures. Thus, Ti may be contained as necessary. However, similar to Nb, an excessive Ti content leads to increased amounts of precipitation at early stages of use, leading to a reduction of toughness. In view of this, to define an upper limit, the Ti content is to be not higher than 0.25 %. To define an upper limit, the T content is desirably not higher than 0.23 %, and more desirably not higher than 0.2 %. To define a lower limit, the Ti content is desirably not lower than 0.01 %, and more desirably not lower than 0.03 %.

Cu: 0 % - 4 % (weld metal); 0 % - 4 % (welding material)

Copper (Cu) increases the stability of austenite microstructure and, in addition, precipitates as fine particles to contribute to the improvement of creep strength. However, an excessive Cu content decreases ductility. In view of this, to define an upper limit, the Cu content is to be not higher than 4 %. To define an upper limit, the Cu content is desirably not higher than 3.8 %, and more desirably not higher than 3.5 %. To define a lower limit, the Cu content is desirably not lower than 0.01 %, and more desirably not lower than 0.03 %.

Co: 0 % - 2 % (weld metal); 0 % - 2 % (welding material)

Similar to Ni and Cu, cobalt (Co) is an austenite-forming element, and increases the stability of austenite microstructure to contribute to the improvement of creep strength. However, Co is a very expensive element, and an excessive Co content means a significantly increased cost. In view of this, if Co is to be contained, to define an upper limit, the Co content is to be not higher than 2 %. To define an upper limit, the Co content is desirably not higher than 1.8 %, and more desirably not higher than 1.5 %. To define a lower limit, the Co content is desirably not lower than 0.01 %, and more desirably not lower than 0.03 %.

Mo: 0 % - 2 % (weld metal); 0 % - 2 % (welding material)

Similar to W, molybdenum (Mo) dissolves in the matrix to contribute to the improvement of creep strength and tensile strength at high temperatures. However, an excessive Mo content may decrease the microstructure stability and rather decrease creep strength. Further, Mo is an expensive element, and an excessive content means an increased cost. In view of this, to define an upper limit, the Mo content is to be not higher than 2 %. To define an upper limit, the Mo content is desirably not higher than 1.5 %, and more desirably not higher than 1.2 %. To define a lower limit, the Mo content is desirably not lower than 0.01 %, and more desirably not lower than 0.03 %.

Ta: 0 % - 1 % (weld metal); 0 % - 1 % (welding material)

Tantalum (Ta) forms carbides and nitrides and, in addition, is a solution-strengthening element that improves high-temperature strength and creep-rupture strength. On the other hand, a Ta content more than 1 % impairs the workability and mechanical properties of steel. In view of this, if Ta is to be contained, to define an upper limit, the Ta content is to be not higher than 1 %. To define a lower limit, the Ta content is desirably not lower than 0.01 %, more desirably not lower than 0.05 %, and yet more desirably not lower than 0.1 %. To define an upper limit, the Ta content is desirably not higher than 0.7 %, and more desirably not higher than 0.6 %.

Ca: 0 % - 0.02 % (weld metal); 0 % - 0.02 % (welding material)

Calcium (Ca) has the effect of improving hot deformability, and thus may be contained as necessary. However, an excessive Ca content combines to oxygen, which significantly decreases cleanliness and rather deteriorates hot deformability. In view of this, to define an upper limit, the Ca content is to be not higher than 0.02 %. To define an upper limit, the Ca content is desirably not higher than 0.015 %, and more desirably not higher than 0.01 %. To define a lower limit, the Ca content is desirably not lower than 0.0005 %, and more desirably not lower than 0.001 %.

Mg: 0 % - 0.02 % (weld metal); 0 % - 0.02 % (welding material)

Similar to Ca, magnesium (Mg) has the effect of improving hot deformability, and thus may be contained as necessary. However, an excessive Mg content combines to oxygen, which significantly decreases cleanliness and rather deteriorates hot deformability. In view of this, to define an upper limit, the Mg content is to be not higher than 0.02 %. To define an upper limit, the Mg content is desirably not higher than 0.015 %, and more desirably not higher than 0.01 %. To define a lower limit, the Mg content is desirably not lower than 0.0005 %, and more desirably not lower than 0.001 %.

REM: 0 % - 0.06 % (weld metal); 0 % - 0.06 (welding material)

Similar to Ca and Mg, rare-earth metals (REMs) have the effect of improving hot deformability, and thus may be contained as necessary. However, an excessive REM content combines to oxygen, which significantly decreases cleanliness and rather deteriorates hot deformability. In view of this, to define an upper limit, the REM content is to be not higher than 0.06 %. To define an upper limit, the REM content is desirably not higher than 0.04 %, and more desirably not higher than 0.03 %. To define a lower limit, the REM content is desirably not lower than 0.0005 %, and more desirably not lower than 0.001 %.

"REM" is a collective term for a total of 17 elements, i.e. Sc, Y and lanthanoids, and REM content refers to the total content of one or more REM elements. Further, REMs are usually contained in mischmetal. Accordingly, for example, the REMs contained may be in the form of mischmetal, where the REM contents are in the above-indicated ranges.

It is difficult to keep REM existing in a stable molten state. Thus, when the stability of the properties of the welded joint is considered, it is preferable that the welding material contains no REM.

The welding material for austenitic heat-resistant steel according to the present embodiment may be manufactured by common methods. For example, the welding material may be obtained by melting an alloy having the chemical composition of the above-discussed welding material to produce an ingot, which is then subjected to hot forging, hot rolling, cold rolling or cold drawing, heat treatment and other steps to produce a wire with an outer diameter of several millimeters (for example, 1.0 mm - 2.4 mm).

The weld metal according to the present embodiment may be manufactured by, for example, welding austenitic heat-resistant steels together using the above-discussed welding material.

<Welded Joint>

The welded joint according to an embodiment of the present invention includes a weld metal as discussed above and a base material of austenitic heat-resistant steel. Specifically, the welded joint includes two base materials, i.e. a weld metal for the joined portion and an austenitic heat-resistant steel sandwiching the weld metal. The welded joint is not limited to any specific shape, nor is the mode of welding (weld position) for providing the welded joint limited to any particular one, and the invention may be applied to implementations where a steel pipe is processed to obtain a groove before butt welding or implementations where a thick plate is processed to obtain a groove before butt welding.

<Base Material>

It is desirable that the base material of the welded joint according to the present embodiment have the following chemical composition.

C: 0.02 % - 0.14 %

Carbon (C) stabilizes austenite microstructure and, in addition, forms fine carbides to improve creep strength during use at high temperatures. In view of this, to define a lower limit, it is desirable that the C content be not lower than 0.02 %. However, if the C content is excessive, large amounts of carbides precipitate, reducing creep ductility and toughness. In view of this, to define an upper limit, it is desirable that the C content be not higher than 0.14 %. To define a lower limit, the C content is more desirably not lower than 0.03 %, and yet more desirably not lower than 0.04 %. To define an upper limit, the C content is more desirably not higher than 0.13 %, and yet more desirably not higher than 0.12 %.

Si: 0.05 % - 1 %

Silicon (Si) has the effect of deoxidation and, in addition, is an effective element for improving corrosion resistance and oxidation resistance at high temperatures. In view of this, to define a lower limit, it is desirable that the Si content be not lower than 0.05 %. However, if the Si content is excessive, nitrides composed of Cr, Ni and N precipitate to stabilize the microstructure, leading to a reduction in the amount of nitrogen dissolved in the matrix, reducing creep strength. In view of this, to define an upper limit, it is desirable that the Si content be not higher than 1 %. To define a lower limit, the Si content is more desirably not lower than 0.08 % and yet more desirably not lower than 0.1 %. To define an upper limit, the Si content is more desirably not higher than 0.8 %, and yet more desirably not higher than 0.5 %

Mn: 0.1 % - 3 %

Similar to Si, Manganese (Mn) has the effect of deoxidization. Further, Mn contributes to the stabilization of austenite microstructure. In view of this, to define a lower limit, it is desirable that the Mn content be not lower than 0.1 %. However, if the Mn content is excessive, this leads to embrittlement, and also causes a reduction in creep ductility. In view of this, to define an upper limit, it is desirable that the Mn content be not higher than 3 %. To define a lower limit, the Mn content is more desirably not lower than 0.3 %, and yet more desirably not lower than 0.5 %. To define an upper limit, the Mn content is more desirably not higher than 2.5 %, and yet more desirably not higher than 2 %.

P: up to 0.04 %

Phosphorus (P) is contained as an impurity in an alloy, and segregates along crystal grain boundaries of the heat-affected zone during welding to increase liquation-cracking susceptibility. Further, P reduces creep ductility after a long-time use. In view of this, to define an upper limit, it is desirable that the P content be not higher than 0.04 %. To define an upper limit, the P content is more desirably not higher than 0.028 %, and yet more desirably not higher than 0.025 %. While it is desirable to minimize P content, an excessive reduction leads to increased manufacturing costs. In view of this, to define a lower limit, the P content is desirably not lower than 0.0005 % and more desirably not lower than 0.0008 %.

S: up to 0.002 %

Similar to P, sulfur (S) is contained as an impurity in an alloy, and segregates along crystal grain boundaries of the heat-affected zone during welding to increase liquation-cracking susceptibility. In view of this, to define an upper limit, it is desirable that the S content be not higher than 0.002 %. To define an upper limit, the S content is more desirably not higher than 0.0018 %, and yet more desirably not higher than 0.0015 %. While it is desirable to minimize S content, an excessive reduction leads to increased manufacturing costs. In view of this, to define a lower limit, the S content is desirably not lower than 0.0001 % and more desirably not lower than 0.0002 %.

Ni: 26 % - 35 %

Nickel (Ni) is an element for ensuring stability of austenite microstructure during long-time use and ensuring creep strength. In view of this, to define a lower limit, it is desirable that the Ni content be not lower than 26 %. However, Ni is an expensive element, and a high content means a higher cost. In view of this, to define an upper limit, it is desirable that the Ni content be not higher than 35 %. To define a lower limit, the Ni content is more desirably not lower than 27 %, and yet more desirably not lower than 28 %. To define an upper limit, the Ni content is more desirably not higher than 34 %, and yet more desirably not higher than 33 %.

Cr: 20 % - 26 %

Chromium (Cr) is an element for ensuring oxidation resistance and corrosion resistance at high temperatures. Further, Cr forms fine carbides to contribute to the ensuring of creep strength. In view of this, to define a lower limit, it is desirable that the Cr content be not lower than 20 %. However, a Cr content more than 26 % deteriorates the stability of austenite microstructure at high temperatures, leading to a reduction in creep strength. In view of this, it is desirable that the Cr content be 20 % - 26 %. To define a lower limit, the Cr content is more desirably not lower than 20.5 %, and yet more desirably not lower than 21 %. To define an upper limit, the Cr content is more desirably not higher than 25.5 %, and yet more desirably not higher than 25 %.

W: 1 % - 7 %

Tungsten (W) is an element that dissolves in the matrix and significantly contributes to the improvement of creep strength and tensile strength at high temperatures. In view of this, to define a lower limit, it is desirable that the W content be not lower than 1 %. However, an excessive W content either leads to saturation in terms of effects or, in some cases, reduces creep strength. Further, W is an expensive element and an excessive W content means a higher cost. In view of this, to define an upper limit, it is desirable that the W content be not higher than 7 %. To define a lower limit, the W content is more desirably not lower than 1.2 %, and yet more desirably not lower than 1.5 %. To define an upper limit, the W content is more desirably not higher than 6.8 %, and yet more desirably not higher than 6.5 %.

Nb: 0.01 % - 1 %

Niobium (Nb) precipitates inside grains in the form of fine carbides and nitrides to contribute to the improvement of creep strength and tensile strength at high temperatures. In view of this, to define a lower limit, it is desirable that the Nb content be not lower than 0.01 %. However, an excessive Nb content results in a large amount of precipitation in the form of carbides and nitrides, leading to a reduction in creep ductility and toughness. In view of this, to define an upper limit, it is desirable that the Nb content be not higher than 1 %. To define a lower limit, the Nb content is more desirably not lower than 0.05 % and yet more desirably not lower than 0.1 %. To define an upper limit, the Nb content is more desirably not higher than 0.9 %, and yet more desirably not higher than 0.8 %.

V: 0.01 % - 1 %

Similar to Nb, Vanadium (V) forms fine carbides and nitrides to contribute to the improvement of creep strength and tensile strength at high temperatures. In view of this, to define a lower limit, it is desirable that the V content be not lower than 0.01 %. However, an excessive V content results in a large amount of precipitation, which reduces creep ductility and toughness. In view of this, to define an upper limit, it is desirable that the V content be not higher than 1 %. To define a lower limit, the V content is more desirably not lower than 0.05 %, and yet more desirably not lower than 0.1 %. To define an upper limit, the V content is more desirably not higher than 0.9 %, and yet more desirably not higher than 0.8 %.

N: 0.1 % - 0.6 %

Nitrogen (N) stabilizes austenite microstructure and, in addition, dissolves or precipitates in the form of nitrides to contribute to the improvement of high-temperature strength. In view of this, to define a lower limit, it is desirable that the N content be not lower than 0.1 %. However, an excessive N content results in precipitation of large amounts of fine nitrides inside grains during long-time use, reducing creep ductility and toughness. In view of this, to define an upper limit, it is desirable that the N content be not higher than 0.6 %. To define a lower limit, the N content is more desirably not lower than 0.12 %, and yet more desirably not lower than 0.15 %. To define an upper limit, the N content is more desirably not higher than 0.58 %, and yet more desirably not higher than 0.55 %.

B: 0.0005 % - 0.008 %

Boron (B) allows fine grain-boundary carbides to be dispersed to improve creep strength, and, in addition, segregates along grain boundaries to contribute to the strengthening of grain boundaries. In view of this, to define a lower limit, it is desirable that the B content be not lower than 0.0005 %. However, an excessive B content increases the liquation-cracking susceptibility of the heat-affected zone during welding. In view of this, to define an upper limit, it is desirable that the B content be not higher than 0.008 %. To define an upper limit, the B content is more desirably not higher than 0.006 %, and yet more desirably not higher than 0.005 %. To define a lower limit, the B content is more desirably not lower than 0.0006 %, and yet more desirably not lower than 0.0008 %.

REM: 0.003 % - 0.06 %

Rare-earth metals (REMs) contribute to the improvement of hot deformability during manufacture. In view of this, to define a lower limit, it is desirable that the REM content be not lower than 0.003 %. However, an excessive REM content combines to oxygen, which significantly decreases cleanliness and rather deteriorates hot deformability. In view of this, to define an upper limit, it is preferable that the REM content be not higher than 0.06 %. To define an upper limit, the REM content is more desirably not higher than 0.04 %, and yet more desirably not higher than 0.03 %. To define a lower limit, the REM content is more desirably not lower than 0.005 %, and yet more desirably not lower than 0.007 %.

Al: up to 0.3 %

Aluminum (Al) is contained as an deoxidizing agent added during manufacture of base material. However, a high Al content deteriorates cleanliness of steel, reducing hot workability. In view of this, to define an upper limit, it is desirable that the Al content be not higher than 0.3 %. To define an upper limit, the Al content is more desirably not higher than 0.25 %, and yet more desirably not higher than 0.2 %. Although no lower limit needs to be specified for Al content, an excessive reduction in Al content leads to an increase in manufacturing costs. In view of this, to define a lower limit, the Al content is desirably not lower than 0.0005 %, and more desirably is not lower than 0.001 %.

O: up to 0.02 %

Oxygen (O) is contained as an impurity in an alloy, and an excessive O content reduces hot workability and also deteriorates toughness and ductility. In view of this, to define an upper limit, it is desirable that the O content be not higher than 0.02 %. To define an upper limit, the O content is more desirably not higher than 0.018 %, and yet more desirably not higher than 0.015 %. Although no lower limit needs to be specified for O content, an excessive reduction in O content leads to an increase in manufacturing costs. In view of this, to define a lower limit, the O content is desirably not lower than 0.0005 %, and more desirably not lower than 0.0008 %.

The balance of the chemical composition of the base material of the welded joint according to the present embodiment is Fe and impurities.

The base material of the welded joint according to the present embodiment may contain one or more elements selected from the group consisting of Ti, Co, Cu, Mo, Ta, Ca and Mg. These ingredients will be described below.

Ti: 0 % - 0.5 %

Similar to Nb and V, titanium (Ti) forms fine carbides and nitrides and contributes to the improvement of creep strength and tensile strength at high temperatures. Thus, Ti may be contained as necessary. However, similar to Nb, an excessive Ti content increases the amount of precipitation at early stages of use, leading to a reduction in toughness. In view of this, to define an upper limit, it is desirable that the Ti content be not higher than 0.5 %. To define an upper limit, the Ti content is more desirably not higher than 0.3 %, and yet more desirably not higher than 0.2 %. To define a lower limit, the Ti content is desirably not lower than 0.01 %, and more desirably not lower than 0.03 %.

Co: 0 % - 2 %

Similar to Ni and Cu, cobalt (Co) is an austenite-forming element, and increases the stability of austenite microstructure to contribute to the improvement of creep strength. Thus, Co may be contained as necessary. However, Co is a very expensive element, and an excessive Co content means a significantly increased cost. In view of this, to define an upper limit, it is desirable that the Co content be not higher than 2 %. To define an upper limit, the Co content is more desirably not higher than 1.8 %, and yet more desirably not higher than 1.5 %. To define a lower limit, the Co content is desirably not lower than 0.01 %, and yet more desirably not lower than 0.03 %.

Cu: 0 % - 4 %

Copper (Cu) increases the stability of austenite microstructure and, in addition, precipitates as fine particles during use to contribute to the improvement of creep strength. Thus, Cu may be contained as necessary. However, an excessive Cu content decreases ductility. In view of this, to define an upper limit, it is desirable that the Cu content be not higher than 4 %. To define an upper limit, the Cu content is more desirably not higher than 3.8 %, and yet more desirably not higher than 3.5 %. To define a lower limit, the Cu content is desirably not lower than 0.01 %, and more desirably not lower than 0.03 %.

Mo: 0 % - 4 %

Similar to W, molybdenum (Mo) is an element that dissolves in the matrix to contribute to the improvement of creep strength and tensile strength at high temperatures. Thus, Mo may be contained as necessary. However, an excessive Mo content may decrease the microstructure stability and rather decrease creep strength. Further, Mo is an expensive element, and an excessive Mo content means an increased cost. In view of this, to define an upper limit, it is desirable that the Mo content be not higher than 4 %. To define an upper limit, the Mo content is more desirably not higher than 2 %, and yet more desirably not higher than 1.2 %. To define a lower limit, the Mo content is desirably not lower than 0.01 %, and more desirably not lower than 0.03 %.

Ta: 0 % - 1 %

Tantalum (Ta) forms carbides and nitrides and, in addition, is a solution-strengthening element that improves high-temperature strength and creep-rupture strength. Thus, Ta may be contained as necessary. On the other hand, a Ta content more than 1 % impairs the workability and mechanical properties of steel. In view of this, to define an upper limit, it is desirable that the Ta content be not higher than 1 %. To define an upper limit, the Ta content is more desirably not higher than 0.7 %, and yet more desirably not higher than 0.6 %. To define a lower limit, the Ta content is desirably not lower than 0.01 %, more desirably not lower than 0.05 %, and yet more desirably not lower than 0.1 %.

Ca: 0 % to 0.02 %

Calcium (Ca) has the effect of improving hot deformability, and thus may be contained as necessary. However, an excessive Ca content combines to oxygen, which significantly decreases cleanliness and rather deteriorates hot deformability. In view of this, to define an upper limit, it is desirable that the Ca content be not higher than 0.02 %. To define an upper limit, the Ca content is more desirably not higher than 0.015 %, and yet more desirably not higher than 0.01 %. To define a lower limit, the Ca content is desirably not lower than 0.0005 %, and more desirably not lower than 0.001 %.

Mg: 0 % - 0.02 %

Similar to Ca, magnesium (Mg) has the effect of improving hot deformability, and thus may be contained as necessary. However, an excessive Mg content combines to oxygen, which significantly decreases cleanliness and rather deteriorates hot deformability. In view of this, to define an upper limit, it is desirable that the Mg content be not higher than 0.02 %. To define an upper limit, the Mg content is more desirably not higher than 0.015 %, and yet more desirably not higher than 0.01 %. To define a lower limit, the Mg content is desirably not lower than 0.0005 %, and more desirably not lower than 0.001 %.

The welded joint according to the present embodiment is not limited to those described above, and may be manufactured by welding base materials as described above together using a welding material as described above.

EXAMPLES

The present invention will now be described more specifically using examples; however, the present invention is not limited to these examples. It is clear that a person skilled in the art can arrive at various variations and modifications within the scope of ideas defined by the claims, and it is understood that these variations and modifications naturally fall within the technical scope of the present invention.

[Welding Material]

Materials (steels) having the chemical compositions shown in Table 1 were molten in a laboratory to cast ingots, which were then subjected to hot forging, hot rolling, heat treatment and machining to fabricate the following two types of plates:

plate type (1) having a plate thickness of 4 mm, a width of 100 mm, and a length of 100 mm; and
plate type (2) having a plate thickness of 4 mm, a width of 200 mm, and a length of 500 mm.

Further, plates of type (2) were machined to fabricate cut fillers with a thickness and width of 2 mm and a length of 500 mm.

[Table 1]

TABLE 1

| Character | Chemical composition (in mass %, balance Fe and impurities) | | | | | | | | | | | | | | | fn1 |
|---|---|---|---|---|---|---|---|---|---|---|---|---|---|---|---|---|
| | C | Si | Mn | P | S | Ni | Cr | V | Nb | W | B | N | Al | O | Others | |
| 1 | 0.086 | 0.20 | 0.50 | <0.002 | 0.001 | 29.97 | 21.80 | 0.20 | 0.40 | 4.98 | 0.0018 | 0.16 | 0.005 | 0.007 | - | 14.37 |
| 2 | 0.077 | 0.21 | 0.54 | <0.002 | 0.001 | 28.50 | 21.60 | 0.20 | 0.39 | 4.66 | 0.0011 | 0.13 | 0.004 | 0.008 | Cu: 0.02, Co: 0.02, Ti: 0.01 | 11.91 |
| 3 | 0.079 | 0.23 | 1.01 | <0.002 | 0.001 | 29.52 | 21.83 | 0.20 | 0.40 | 4.92 | 0.0012 | 0.13 | 0.006 | 0.010 | Cu: 0.02, Mo: 0.01, REM: 0.01 | 12.03 |
| 4 | 0.070 | 0.20 | 0.55 | <0.002 | 0.001 | 29.06 | 21.70 | 020 | 0.29 | 5.51 | 0.0009 | 0.13 | 0.005 | 0.009 | Ta: 0.01 | 12.18 |
| 5 | 0.079 | 0.22 | 0.53 | <0.002 | 0.001 | 29.72 | 21.91 | 0.21 | 0.41 | 4.99 | 0.0013 | 0.14 | 0.007 | 0.013 | Cu: 295, Ca: 0.001, Mg: 0.001 | 13.02 |
| 6 | 0.073 | 0.23 | 0.55 | <0.002 | 0.001 | 28.64 | 21.59 | 0.20 | 0.38 | 6.57 | 0.0011 | 0.13 | 0.003 | 0.012 | Cu: 0.02 | 14.16 |
| 7 | 0.098 | 0.40 | 0.42 | <0.002 | 0.001 | 32.01 | 21.95 | 0.20 | 0.20 | 2.96* | 0.0015 | 0.20 | 0.009 | 0.010 | - | 4.75* |
| 8 | 0.097 | 0.38 | 1.02 | <0.002 | 0.001 | 29.87 | 21.98 | 0.20 | 0.38 | 5.01 | -* | 0.22 | 0.008 | 0.011 | - | 8.16* |
| 9 | 0.096 | 060* | 1.03 | <0.002 | 0.001 | 31.81 | 21.98 | 0.21 | 0.40 | 5.01 | 0.0015 | 0.23 | 0.007 | 0.009 | - | 5.43* |
| 10 | 0.096 | 0.40 | 1.03 | <0.002 | 0.001 | 29.95 | 22.08 | 0.20 | 0.39 | 5.02 | 0.0007 | 0.25 | 0.005 | 0.014 | - | 9.38* |
| 11 | 0.096 | 0.40 | 1.03 | <0.002 | 0.001 | 29.95 | 22.08 | 020 | 0.39 | 5.02 | 0.0053* | 0.21 | 0.006 | 0.010 | - | 15.60 |
| 12 | 0.085 | 0.30 | 1.05 | <0.002 | 0.001 | 30.95 | 23.50 | 0.20 | 1.20* | 4.96 | 0.0009 | 0.13 | 0.004 | 0.009 | - | 17.95 |
| 13 | 0.076 | 0.23 | 0.56 | <0.002 | 0.001 | 29.84 | 22.28 | 0.20 | 0.38 | 5.53 | -* | 0.15 | 0.005 | 0.008 | - | 11.35 |
| The symbol "*" indicates that the associated value falls outside the range of the invention. | | | | | | | | | | | | | | | | |

EP 3 712 288 A1

[Trans-Varestraint Test]

Trans-varestraint test specimens were extracted from plates of type (1). Thereafter, bead-on-plate welding was performed by GTAW with a welding current of 100 A and at a welding speed of 15 cm/min. For each specimen, when the weld pool reached the middle of the specimen as determined along the longitudinal direction, a bending deformation was applied to the specimen and an added distortion was applied to the weld metal to cause a crack. The added distortion was 2 %, at which saturation is reached in terms of maximum crack length. For evaluation, the maximum crack length that had developed in the weld metal was measured and treated as an evaluation indication of the solidification cracking susceptibility of the welding material. The targeted crack length was 1.3 mm, or less, which is the maximum crack length evaluated by trans-varestraint tests of Alloy 800H weld metal, which solidifies as perfect austenite.

[Creep Rupture Test]

Cut fillers fabricated from plates of type (2) were used to perform buttering welding on the groove by manual tig welding using Ar as a shield gas, and lamination welding was then performed inside the groove to fabricate all-weld-metal specimens. For welding, the heat input was 9 kJ/cm - 12 kJ/cm, and the inter-pass temperature was 150 °C or lower. No pre-weld heat treatment (pre-heating) or post-weld heat treatment was performed. Thereafter, round-rod creep-rupture specimens were extracted from the all-weld-metal portions. Creep-rupture testing was then performed at 750 °C and 127 MPa, and the specimens with rupture times above 1000 hours, which was the target under these conditions, were labeled "passed", and those with rupture times not longer than 1000 hours were labeled "failed".

Table 2 shows the results of the above-discussed tests.

[Table 2]

TABLE 2

| Character | Determination of max. crack length | Determination of creep strength |
|---|---|---|
| 1 | passed | passed |
| 2 | passed | passed |
| 3 | passed | passed |
| 4 | passed | passed |
| 5 | passed | passed |
| 6 | passed | passed |
| 7 | passed | failed |
| 8 | passed | failed |
| 9 | passed | failed |
| 10 | passed | failed |
| 11 | failed | passed |
| 12 | failed | passed |
| 13 | passed | failed |

Table 2 demonstrates that the welding materials labeled with characters 1 to 6, which have chemical compositions falling within the ranges specified by the present invention, had low weld high-temperature cracking susceptibility and satisfied the targeted creep-rupture time.

In contrast, the welding material labeled with character 7, which had a W content lower than the range of the present invention, the welding materials with characters 8 and 13, which contained no B, and the welding material labeled with character 9, which had an Si content higher than the range of the present invention, each had a creep strength below the target, while they had low high-temperature cracking susceptibilities. The welding material labeled with character 10, which had a low fn1 value even though it satisfied the ingredient ranges of the present invention, had a creep strength below the target, while it had a low high-temperature crack susceptibility. The welding material labeled with character 11, which had a B content higher than the range of the present invention, and the welding material labeled with character 12, which had an Nb content higher than the range of the present invention, had an increased high-temperature cracking susceptibility, while it had no problem in terms of creep strength.

Thus, it is clear that the welding materials satisfying the requirements of the present invention had low high-temperature cracking susceptibilities, and had sufficient creep strengths. This demonstrates that the welding material for austenitic heat-resistant steel of the present invention may provide a suitable welding material for welding high-nitrogen/high-nickel-content austenitic heat-resistant steel.

[Weld Metal and Welded Joint]

Materials having the chemical compositions shown in Table 3 were molten in a laboratory to cast ingots, which were then subjected to hot forging, hot rolling, cold rolling, heat treatment and machining to fabricate plates (plates of type (1)), each with a plate thickness of 12 mm, a width of 50 mm and a length of 120 mm. The plates of type (1) were treated as base materials for welding.

Further, materials having the chemical compositions shown in Table 4 were molten in a laboratory to cast ingots, which were then subjected to hot forging, hot rolling, heat treatment and machining to fabricate plates (plates of type (2)), each with a plate thickness of 4 mm, a width of 200 mm and a length of 500 mm. The plates of type (2) were machined to fabricate cut fillers with a thickness and width of 2 mm and a length of 500 mm.

[Table 3]

TABLE 3

| Character | Chemical composition of base material (in mass %, balance Fe and impurities) | | | | | | | | | | | | | | | |
|---|---|---|---|---|---|---|---|---|---|---|---|---|---|---|---|
| | C | Si | Mn | P | S | Ni | Cr V | Nb | W | B | N | Al | O | REM | Others |
| A | 0.080 | 0.20 | 0.51 | 0.015 | 0.001 | 29.62 | 21.64 0.21 | 0.20 | 4.54 | 0.0029 | 0.19 | 0.025 | 0.005 | 0.02 | Cu: 0.01 |
| B | 0.080 | 0.18 | 1.01 | 0.015 | 0.001 | 29.92 | 21.77 0.20 | 0.19 | 4.98 | 0.0028 | 0.18 | 0.027 | 0.008 | 0.01 | - |
| C | 0.077 | 0.38 | 1.05 | 0.003 | 0.001 | 30.71 | 22.27 0.21 | 0.28 | 4.04 | 0.0026 | 0.17 | 0.026 | 0.006 | 0.03 | Ti: 0.02, Co: 0.02, Mo: 0.03 |
| D | 0.084 | 0.19 | 0.53 | 0.015 | 0.001 | 29.9 | 21.88 0.19 | 0.32 | 4.37 | 0.0027 | 0.21 | 0.023 | 0.008 | 0.02 | Ta: 0.03, Ca: 0.001, Mg: 0.002 |

[Table 4]

TABLE 4

| Character | Chemical composition of cut filter (in mass %, balance Fe and impurities) | | | | | | | | | | | | | | |
|---|---|---|---|---|---|---|---|---|---|---|---|---|---|---|---|
| | C | Si | Mn | P | S | Ni | Cr | V | Nb | W | B | N | Al | O | Others |
| E | 0.081 | 0.22 | 0.54 | <0.002 | 0.001 | 29.86 | 21.75 | 0.20 | 0.3 9 | 4.92 | 0.0014 | 0.15 | 0.006 | 0.008 | - |
| F | 0.080 | 0.21 | 0.51 | <0.002 | 0.001 | 29.52 | 21.46 | 0.20 | 0.35 | 4.98 | 0.0012 | 0.13 | 0.005 | 0.007 | Cu: 0.01, Co: 0.02, Ti: 0.01 |
| G | 0.080 | 0.31 | 0.98 | <0.002 | 0.001 | 31.87 | 21.43 | 0.19 | 0.36 | 5.59 | 0.0011 | 0.1 6 | 0.006 | 0.009 | Mo: 0.01, Ta: 0.01, REM: 0.01 |
| H | 0.073 | 0.23 | 0.43 | <0.002 | 0.001 | 29.95 | 21.89 | 0.20 | 0.39 | 6.51 | 0.0013 | 0.14 | 0.007 | 0.011 | Cu: 0.03, Ca: 0.001, Mg: 0.001 |
| I | 0.096 | 0.32 | 0.55 | <0.002 | 0.001 | 31.85 | 21.78 | 0.20 | 0.21 | 3.05 | 0.0015 | 0.12 | 0.005 | 0.013 | Cu: 0.01 |
| J | 0.081 | 0.65 | 0.52 | <0.002 | 0.001 | 29.56 | 21.59 | 0.21 | 0.41 | 5.05 | 0.0012 | 0.21 | 0.005 | 0.012 | Cu:0.01 |
| K | 0.075 | 0.31 | 0.54 | <0.002 | 0.001 | 30.54 | 22.09 | 0.20 | 0.38 | 4.92 | 0.0055 | 0.16 | 0.004 | 0.009 | - |
| L | 0.081 | 0.28 | 1.02 | <0.002 | 0.001 | 30.81 | 22.98 | 0.19 | 1.19 | 4.95 | 0.0010 | 0.13 | 0.005 | 0.01 0 | - |
| M | 0.08 | 0.51 | 0.56 | <0.002 | 0.001 | 29.89 | 22.15 | 0.2 | 0.36 | 5.02 | 0.0009 | 0.18 | 0.005 | 0.008 | - |

For each of the plates of type (1), a V-groove with an angle of 30 ° and a root face of 1 mm and extending lengthwise was formed, before the plate was placed on a commercial steel plate (SM400B specified in JIS G 3160 (2008) with a thickness of 25 mm, a width of 150 mm and a length of 200 mm) and was restraint-welded along the four sides using a coated-arc-welding electrode ("DNiCrFe-3" specified by JIS Z 3224 (1999)).

Thereafter, each of the fabricated cut fillers was used and lamination welding was performed within the groove by manual tig welding using Ar as a shield gas to fabricate a welded joint. For welding, the heat input was 9 kJ/cm - 15 kJ/cm.

The weld metal of each of the thus obtained welded joints was cut perpendicular to the longitudinal direction to produce a cross section, which was drilled for about 1 mm at the middle as determined along the width direction and the middle as determined along the plate-thickness direction and chips were collected, and chemical analysis was conducted on the weld metal. Table 5 shows the results.

[Table 5]

TABLE 5

| Character | Base material | Cut filler | Chemical composition of weld metal (in mass %, balance Fe and impurities) | | | | | | | | | | | | | | | |
|---|---|---|---|---|---|---|---|---|---|---|---|---|---|---|---|---|---|---|
| | | | C | Si | Mn | P | S | Ni | Cr | V | Nb | W | B | 'N | Al | O | Others | fn1 |
| A1 | A | E | 0.079 | 0.20 | 0.52 | <0.002 | 0.001 | 29.76 | 21.71 | 0.20 | 0.38 | 4.86 | 0.0011 | 0.12 | 0.005 | 0.008 | Cu: 0.01 | 12.14 |
| A2 | | F | 0.075 | 0.22 | 0.52 | <0.002 | 0.001 | 29.55 | 21.51 | 0.22 | 0.36 | 4.95 | 0.0014 | 0.13 | 0.004 | 0.008 | Cu: 0.01, Co: 0.01, Ti: 0.01 | 12.33 |
| A3 | | G | 0.081 | 0.29 | 0.94 | <0.002 | 0.001 | 31.82 | 21.49 | 0.18 | 0.34 5.42 | | 0.001 | 0.15 | 0.007 | 0.010 | Mo: 0.01, Ta: 0.01, REM: 0.01 | 10.50 |
| A4 | | H | 0.071 | 0.21 | 0.42 | <0.002 | 0.001 | 29.91 | 21.82 | 0.22 | 0.41 | 6.41 | 0.001 | 0.14 | 0.008 | 0.013 | Cu: 0.02, Ca: 0.001, Mg: 0.001 | 14.89 |
| A5 | | 1 | 0.095 | 0.31 | 0.5 | <0.002 | 0.001 | 31.87 | 21.65 | 0.2 | 0.19 | 3.01* | 0.0014 | 0.14 | 0.006 | 0.015 | Cu: 0.01 | 5.55* |
| A6 | | J | 0.074 | 0.62* | 0.46 | <0.002 | 0.001 | 29.46 | 21.45 | 0.23 | 0.38 | 4.98 | 0.0013 | 0.2 | 0.006 | 0.012 | Cu: 0.01 | 4.04* |
| A7 | | K | 0.076 | 0.28 | 0.58 | <0.002 | 0.001 | 30.47 | 22.18 | 0.21 | 0.34 | 4.91 | 0.0053* | 0.16 | 0.007 | 0.011 | - | 16.92 |
| A8 | | L | 0.083 | 0.32 | 1.05 | <0.002 | 0.001 | 30.8 | 22.87 | 0.18 | 1.15* | 4.85 | 0.0011 | 0.13 | 0.005 | 0.010 | - | 16.85 |
| A9 | | M | 0.078 | 0.49 | 0.55 | <0.002 | 0.001 | 29.85 | 22.01 | 0.19 | 0.33 | 4.99 | 0.0007 | 0.16 | 0.004 | 0.009 | - | *4.69 |
| B1 | | E | 0.076 | 0.21 | 0.50 | <0.002 | 0.001 | 29.86 | 21.73 | 0.19 | 0.37 | 4.88 | 0.001 | 0.14 | 0.004 | 0.009 | - | 11.97 |
| B2 | | F | 0.077 | 0.25 | 0.52 | <0.002 | 0.001 | 29.45 | 21.49 | 0.20 | 0.33 | 4.92 | 0.0009 | 0.14 | 0.005 | 0.009 | Cu: 0.01, Co: 0.01, Ti: 0.01 | 10.50 |
| B3 | | G | 0.075 | 0.33 | 0.93 | <0.002 | 0.001 | 31.85 | 21.35 | 0.22 | 0.35 | 5.44 | 0.0013 | 0.15 | 0.007 | 0.011 | Mo: 0.01, Ta: 0.01, REM: 0.01 | 10.46 |

(continued)

| Character | Base material | Cut filler | Chemical composition of weld metal (in mass %, balance Fe and impurities) | | | | | | | | | | | | | | | |
|---|---|---|---|---|---|---|---|---|---|---|---|---|---|---|---|---|---|---|
| | | | C | Si | Mn | P | S | Ni | Cr | V | Nb | W | B | ' N | Al | O | Others | fn1 |
| B4 | B | H | 0.071 | 021 | 0.41 | <0.002 | 0.001 | 29.90 | 21.86 | 0.21 | 0.36 | 6.41 | 0.0009 | 0.13 | 0.005 | 0.012 | Cu: 0.01, Ca: 0.001, Mg: 0.001 | 14.04 |
| B5 | | I | 0.090 | 0.31 | 0.50 | <0.002 | 0.001 | 31.75 | 21.72 | 0.20 | 0.22 | 2.94* | 0.0010 | 0.13 | 0.004 | 0.014 | Cu: 0.01 | 4.94* |
| B6 | | J | 0.076 | 0.63* | 0.49 | <0.002 | 0.001 | 29.59 | 21.63 | 0.21 | 0.38 | 5.03 | 0.0009 | 0.19 | 0.006 | 0.012 | Cu:0.01 | 2.75* |
| B7 | | K | 0.068 | 0.29 | 0.52 | <0.002 | 0.001 | 30.44 | 21.98 | 0.21 | 0.36 | 4.91 | 0.0052* | 0.16 | 0.005 | 0.001 | - | 16.72 |
| B8 | | L | 0.077 | 0.26 | 0.96 | <0.002 | 0.001 | 30.75 | 22.62 | 0.16 | 1.07* | 4.87 | 0.0009 | 0.13 | 0.004 | 0.011 | - | 17.16 |
| B9 | | M | 0.076 | 0.48 | 0.5 | <0.002 | 0.001 | 29.84 | 22.13 | 0.2 | 0.34 | 4.8 5 | 0.0008 | 0.15 | 0005 | 0.008 | - | *5.03 |
| C1 | | E | 0.076 | 0.21 | 0.56 | <0.002 | 0.001 | 29.85 | 21.85 | 0.20 | 0.37 | 4.71 | 0.0011 | 0.13 | 0.005 | 0.008 | Co: 0.01, Ti: 0.01, Mo: 0.01 | 11.77 |
| C2 | | F | 0.079 | 0.19 | 0.48 | <0.002 | 0.001 | 29.41 | 21.42 | 0.19 | 0.32 | 4.92 | 0.0011 | 0.13 | 0.004 | 0.006 | Cu: 0.01, Co: 0.02, Ti: 0.02, Mo: 0.03 | 11.98 |
| C3 | C | G | 0.078 | 0.28 | 0.92 | <0.002 | 0.001 | 31.74 | 21.43 | 0.21 | 0.34 | 5.44 | 0.0008 | 0.14 | 0.006 | 0.008 | Ti: 0.02, Co: 0.02, Mo: 0.01, Ta: 0.01, REM: 0.01 | 10.66 |

| Character | Base material | Cut filler | Chemical composition of weld metal (in mass %, balance Fe and impurities) | | | | | | | | | | | | | | | fn1 |
| --- | --- | --- | --- | --- | --- | --- | --- | --- | --- | --- | --- | --- | --- | --- | --- | --- | --- | --- |
| | | | C | Si | Mn | P | S | Ni | Cr | V | Nb | W | B | ' N | Al | O | Others | |
| C4 | | M | 0.072 | 0.22 | 0.37 | <0.002 | 0.001 | 29.94 | 21.81 | 0.22 | 0.35 | 6.41 | 0.0010 | 0.12 | 0.007 | 0.011 1 | Cu: 0.02, Ti: 0.01, Co: 0.01, Mo: 0.01, Ca: 0.001, Mg: 0.001 | 13.72 |
| D1 | D | E | 0.082 | 0.22 | 0.53 | <0.002 | 0.001 | 29.88 | 21.82 | 0.20 | 0.38 | 4.75 | 0.001 | 0.12 | 0.006 | 0.009 | Ta: 0.01, Ca: 0.001, Mg: 0.001 | 11.33 |
| D2 | | F | 0.078 | 0.20 | 0.50 | <0.002 | 0.001 | 29.39 | 21.46 | 0.19 | 0.34 | 4.95 | 0.0010 | 0.13 | 0.004 | 0.008 | Cu: 0.01, Co: 0.01, Ti: 0.01, Ta: 0.01, Ca: 0.001, Mg: 0.001 | 11.83 |
| D3 | | G | 0.079 | 0.29 | 0.92 | <0.002 | 0.001 | 30.82 | 21.42 | 0.20 | 0.36 | 5.51 | 0.0011 | 0.14 | 0.006 | 0.009 | Mo: 0.01, Ta: 0.01, Ca: 0.001, Mg: 0.001, REM: 0.01 | 11.07 |

(continued)

| Character | Base material | Cut filler | Chemical composition of weld metal (in mass %, balance Fe and impurities) | | | | | | | | | | | | | | | |
|---|---|---|---|---|---|---|---|---|---|---|---|---|---|---|---|---|---|---|
| | | | C | Si | Mn | P | S | Ni | Cr | V | Nb | W | B | ' N | Al | O | Others | fn1 |
| D4 | | M | 0.067 | 0.20 | 0.40 | <0.002 | 0.001 | 29.84 | 21.85 | 0.22 | 0.38 | 6.49 | 0.0008 | 0.12 | 0.006 | 0.010 | Cu: 0.01, Ta: 0.01, Ca: 0.001, Mg: 0.001 | 14.34 |

The symbol "*" indicates that the associated value falls outside the range of the invention.

[Weld Cracking Resistance]

Specimens were extracted from five locations of the weld metal of each of the fabricated welded joints, where the observed face was provided by a transverse section (i.e. a section perpendicular to the weld bead) of the joint. The extracted specimens were mirror-face-polished and corroded before being observed by optical microscopy to determine whether there were cracks in the welded metal portion. The welded joints for which no cracks were observed in all the five specimens and the welded joints for which cracks were observed in one specimen were determined to have "passed" the test. The welded joints for which cracks were observed in two or more specimens were determined to have "failed" the test.

[Creep-Rupture Test]

Round-rod creep-rupture test specimens were extracted from the welded joints, where the weld metal was positioned at the middle of the parallel portion. Creep-rupture testing was then performed at 750 °C and 127 MPa, and those with rupture times above 1000 hours, which was about 80 % of the target rupture time of the base material, were labeled "passed", and those with rupture times not larger than 1000 hours were labeled "failed".
Table 6 shows the results of these tests.

[Table 6]

TABLE 6

| Character | Base material | Cut filler | Determination of weld crack | Determination of creep strength |
|-----------|---------------|------------|-----------------------------|----------------------------------|
| A1 | A | E | passed | passed |
| A2 | | F | passed | passed |
| A3 | | G | passed | passed |
| A4 | | H | passed | passed |
| A5 | | I | passed | failed |
| A6 | | J | passed | failed |
| A7 | | K | failed | passed |
| A8 | | L | failed | passed |
| A9 | | M | passed | failed |
| B1 | B | E | passed | passed |
| B2 | | F | passed | passed |
| B3 | | G | passed | passed |
| B4 | | H | passed | passed |
| B5 | | I | passed | failed |
| B6 | | J | passed | failed |
| B7 | | K | failed | passed |
| B8 | | L | failed | passed |
| B9 | | M | passed | failed |
| C1 | C | E | passed | passed |
| C2 | | F | passed | passed |
| C3 | | G | passed | passed |
| C4 | | M | passed | passed |

(continued)

| Character | Base material | Cut filler | Determination of weld crack | Determination of creep strength |
|-----------|---------------|------------|-----------------------------|---------------------------------|
| D1 | | E | passed | passed |
| D2 | D | F | passed | passed |
| D3 | | G | passed | passed |
| D4 | | M | passed | passed |

Table 6 demonstrates that the welded joints having the weld metals labeled with characters A1 to A4, B1 to B4, C1 to C4 and D1 to D4, having chemical compositions falling within the ranges specified by the present invention, each had a low weld high-temperature cracking susceptibility and a creep rupture time of 80 % or more of the target rupture time of the base material.

In contrast, for each of the welded joints having the weld metals labeled with characters A5 and B5, the weld metal had a W content below the lower limit of the range of the present invention, i.e. more than 4.5 %, and a creep strength below the target. Further, for each of the welded joints having the weld metals labeled with characters A6 and B6, the weld metal had an Si content more than the upper limit of the range of the present invention, i.e. 0.6 %, and consequently had a creep strength below the target. For each of the welded joints having the weld metals labeled with characters A7 and B7, the weld metal had a B content more than the upper limit of the range of the present invention, i.e. 0.005 %, and consequently had an increased weld high-temperature cracking susceptibility. For each of the welded joints having the weld metals labeled with characters A8 and B8, the weld metal had an Nb content more than the upper limit of the range of the present invention, i.e. 0.5 %, and consequently had an increased weld high-temperature cracking susceptibility. For each of the welded joints having the weld metals labeled with characters A9 and B9, the value of fn1 was below 10.0, and consequently had a creep strength below the target.

Thus, the weld metals satisfying the requirements of the present invention had low high-temperature cracking susceptibilities and satisfied the creep strengths required for welded structures, and thus the properties of high-nitrogen/high-nickel-content austenitic heat-resistant steel can be sufficiently exhibited.

INDUSTRIAL APPLICABILITY

Adopting the present invention will provide an austenitic heat-resistant steel weld metal with low high-temperature cracking susceptibility and good creep strength that, when a high-nitrogen/high-nickel-content austenitic heat-resistant steel is used as a welded structure, allows that steel to fully exhibit their properties, and a welded joint having such a weld metal. Thus, the weld metal of the present invention and a welded joint having this metal are useful as a weld metal constituting part of a welded structure using high-nitrogen/high-nickel-content austenitic heat-resistant steel and used in a device used at high temperatures, such as boilers for thermal power generation, and a welded joint having such a weld metal.

**Claims**

1.   An austenitic heat-resistant steel weld metal having a chemical composition of, in mass %:

> 0.06 % - 0.14 % C;
> 0.1 % - 0.6 % Si;
> 0.1 % - 1.8 % Mn;
> up to 0.025 % P;
> up to 0.003 % S;
> 25 % - 35 % Ni;
> 20 % - 24 % Cr;
> more than 4.5 % and up to 7.5 % W;
> 0.05 % - 0.5 % Nb;
> 0.05 % - 0.4 % V;
> 0.1 % - 0.35 % N;
> up to 0.08 % Al;
> up to 0.08 % O;
> 0.0005 - 0.005 % B;

0 % - 0.25 % Ti;
0 % - 4 % Cu;
0 % - 2 % Co;
0 % - 2 % Mo;
0 % - 1 % Ta;
0 % - 0.02 % Ca;
0 % - 0.02 % Mg;
0 % - 0.06 % REM; and
balance Fe and impurities,

fn1 expressed by the following Equation (1) being not less than 10:

$$\mathrm{fn}1 = 10(Nb+V) + 1.5W + 20N + 1500B - 25Si \qquad (1),$$

where, for Nb, V, W, N, B and Si in Equation (1), the contents of the named elements in mass % are substituted.

2. The austenitic heat-resistant steel weld metal according to claim 1, wherein the chemical composition includes one or more elements selected from the group consisting of, in mass %:

0.01 % - 0.25 % Ti;
0.01 % - 4 % Cu;
0.01 % - 2 % Co;
0.01 % - 2 % Mo;
0.01 % - 1 % Ta;
0.0005 % - 0.02 % Ca;
0.0005 % - 0.02 % Mg; and
0.0005 % - 0.06 % REM.

3. A welded joint comprising:

the austenitic heat-resistant steel weld metal according to claim 1 or 2; and
a base material of austenitic heat-resistant steel.

4. The welded joint according to claim 3, wherein the base material has a chemical composition of, in mass %:

0.02 % - 0.14 % C;
0.05 % - 1 % Si;
0.1 % - 3 % Mn;
up to 0.04 % P;
up to 0.002 % S;
26 % - 35 % Ni;
20 % - 26 % Cr;
1 % - 7 % W;
0.01 % - 1 % Nb;
0.01 % - 1 % V;
0.1 % - 0.6 % N;
0.0005 % - 0.008 % B;
0.003 % - 0.06 % REM;
up to 0.3 % Al;
up to 0.02 % O;
0 % - 0.5 % Ti;
0 % - 2 % Co;
0 % - 4 % Cu;
0 % - 4 % Mo;
0 % - 1 % Ta;
0 % - 0.02 % Ca;

0 % - 0.02 % Mg; and
balance Fe and impurities.

5. The welded joint according to claim 4, wherein the base material has a chemical composition including one or more elements selected from the group consisting of, in mass %:

0.01 % - 0.5 % Ti;
0.01 % - 2 % Co;
0.01 % - 4 % Cu;
0.01 % - 4 % Mo;
0.01 % - 1 % Ta;
0.0005 % - 0.02 % Ca; and
0.0005 % - 0.02 % Mg.

6. A welding material for austenitic heat-resistant steel having a chemical composition of, in mass %:

0.06 % - 0.14 % C;
0.1 % - 0.4 % Si;
0.1 % - 1.2 % Mn;
up to 0.01 % P;
up to 0.003 % S;
28 % - 35 % Ni;
20 % - 24 % Cr;
more than 4.5 % and up to 7.5 % W;
0.05 % - 0.5 % Nb;
0.05 % - 0.35 % V;
0.1 % - 0.35 % N;
up to 0.08 % Al;
up to 0.08 % O;
0.0005 % - 0.005 % B;
0 % - 0.25 % Ti;
0 % - 4 % Cu;
0 % - 2 % Co;
0 % - 2 % Mo;
0 % - 1 % Ta;
0 % - 0.02 % Ca;
0 % - 0.02 % Mg;
0 % - 0.06 % REM; and
balance Fe and impurities,

fn1 expressed by the following Equation (1) being not less than 10:

$$fn1 = 10(Nb+V) + 1.5W + 20N + 1500B - 25Si \qquad (1),$$

where, for Nb, V, W, N, B and Si in Equation (1), the contents of the named elements in mass % are substituted.

7. The welding material for austenitic heat-resistant steel according to claim 6, wherein the chemical composition includes one or more elements selected from the group consisting of, in mass %:

0.01 % - 0.25 % Ti;
0.01 % - 4 % Cu;
0.01 % - 2 % Co;
0.01 % - 2 % Mo;
0.01 % - 1 % Ta;
0.0005 % - 0.02 % Ca;
0.0005 % - 0.02 % Mg; and

0.0005 % - 0.06 % REM.

8. A method of manufacturing the welded joint according to claim 4, comprising welding the base material having the chemical composition according to claim 4 using the welding material for austenitic heat-resistant steel according to claim 6.

**INTERNATIONAL SEARCH REPORT**

| | International application No. |
|---|---|
| | PCT/JP2018/040656 |

A. CLASSIFICATION OF SUBJECT MATTER
Int.Cl. C22C38/00(2006.01)i, B23K35/30(2006.01)i, C22C38/58(2006.01)i

According to International Patent Classification (IPC) or to both national classification and IPC

B. FIELDS SEARCHED

Minimum documentation searched (classification system followed by classification symbols)
Int.Cl. C22C38/00-38/60, B23K35/00-35/40

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2001-107196 A (SUMITOMO METAL INDUSTRIES, LTD.) 17 April 2001 (Family: none) | 1-8 |
| A | JP 2017-166004 A (SANYO SPECIAL STEEL CO., LTD.) 21 September 2017 (Family: none) | 1-8 |
| A | WO 2016/204005 A1 (NIPPON STEEL & SUMITOMO METAL CORPORATION) 22 December 2016 & US 2018/0142334 A1 & EP 3309274 A1 & CA 2982247 A1 & KR 10-2017-0128549 A & CN 107532258 A | 1-8 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19.12.2018 | 08.01.2019 |

| Name and mailing address of the ISA/ Japan Patent Office 3-4-3, Kasumigaseki, Chiyoda-ku, Tokyo 100-8915, Japan | Authorized officer Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO591984173249 A
- JP 2002537486 A
- JP 3838216 B
- JP 2017088957 A
- JP 2722893 B
- JP HEI071995060481 A
- JP 3329262 B
- JP 3918670 B
- JP 3329261 B
- JP 2017014576 A